# EUROPEAN PATENT APPLICATION

(11) **EP 3 594 463 A1**
(43) Date of publication of application: **15.01.2020**
(21) Application number: 18183534.9
(22) Date of filing: 13.07.2018
(51) Int. Cl.: F01N 3/20, G01N 29/024, G01F 23/296, C02F 1/36

(54) **METHOD FOR DECONTAMINATING AN AUTOMOTIVE TANK, METHOD FOR OPERATING AN AUTOMOTIVE TANK, USE OF AN ULTRASOUND SENSOR FOR DECONTAMINATING A TANK AND AUTOMOTIVE TANK**

(71) Applicant: Plastic Omnium Advanced Innovation and Research, 1130 Bruxelles (BE)
(72) Inventor: MONGE-BONINI, Beatriz, 1150 Woluwé Saint-Pierre (BE); RELAVE-NOIRAY, Arthur, 1120 Bruxelles (BE)
(74) Representative: LLR

(57) **Abstract**

The invention relates to a method for decontaminating an automotive tank (1) for an aqueous solution (3) comprising an ultrasound sensor (11, 12/13/15) arranged for measuring a parameter of the solution (3) stored in the tank (1). The method comprises a step of using the ultrasound sensor (11, 12/13/15) for emitting sound waves at a frequency and an intensity adapted to decontaminate the tank (1).

## Description

The present invention relates to decontamination, or disinfection, and more particularly to decontamination of an aqueous solution within a tank of an automotive vehicle. More precisely, the invention relates to a method for decontaminating an aqueous solution in an automotive tank. The aqueous solution may be a urea solution or water within a tank integrated onboard a vehicle. The invention also relates to the use of an ultrasound sensor for decontaminating an aqueous solution in an automotive tank. A further aspect of the invention relates to an automotive tank comprising such an ultrasound sensor.

Many options are available for the decontamination of a fluid in an automotive tank, regrouping passive and active options. Among passive options, it is known to use antimicrobial agents to be mixed with the fluid to be decontaminated. Other passive options consist in causing the fluid to be decontaminated to contact a decontaminating surface. For example, a decontaminating surface, can consist in an antimicrobial agent embedded inside the material of the tank or coated on its inner surface. Among active options, it is known (for example from WO-A1-2018/50893 to expose water contained in the tank to UV radiation (UV radiators or UV lamps).

This last option requires a source of energy to operate. The power consumption onboard a vehicle is always a source of concerns; all functions have to be performed at the lowest possible power consumption. This last option is expensive and complex. In addition, UV radiators are fragile and must be replaced periodically. Their location in the tank makes the replacement operation difficult and costly. All these options of the state of the art require additional mounting and processing operations of at least one component of the system, which is time-consuming and costly.

In order to have a better integration of the overall hydraulic system, the inventors have contemplated the possibility to rethink how fluids can be decontaminated and how some functions could be embedded into existing components.

Sensors for quality or level measurement are existing components of automotive tanks for aqueous solutions. Different properties of the fluid can be monitored such as its conductivity, the sound propagation speed (ultrasonic waves for example), its viscosity, density... Among them, sound-emitting sensors, also referred to as ultrasound sensors, can be used, for example to measure an instant filling level of the tank by distance determination. For example, the ultrasound sensor can measure the instant filling level directly by directing the sound waves up to the liquid surface. It is also known to measure the concentration of a component in an aqueous solution contained in the tank by directing sound waves to a sound deflection device which is integrated in the tank and which redirects the sound waves towards a receiver. As both the distances between the emitter and the deflecting device and between the deflecting device and the receiver are known, by measuring the propagation time, it is possible to determine the concentration of said component in the aqueous solution contained in the tank since the propagation speed depends upon the concentration.

Furthermore, it is known to use ultrasounds to kill bacteria and fungi in water as a disinfection method in wastewater treatment and aquaculture.

The killing mechanism is based on acoustic cavitation, i.e. the influence of an ultrasonic wave on the formation, growth, oscillation and collapse of bubbles (gaseous cavities) in a liquid medium. Cavitation may occur in the coupling medium for both low frequency and high frequency ultrasound. However, the effects of such cavitation are more intense at low frequencies. The equipment used for this purpose normally works at low frequency, even though some publications refer to the use of high frequency (1MHz).

It is an object of the invention to provide a method for decontaminating an aqueous solution within an automotive tank without having to mount additional components in the tank, or to process a component of the system.

Accordingly it is an object of the invention to provide a method for decontaminating an automotive tank for an aqueous solution comprising an ultrasound sensor arranged for measuring a parameter of the solution stored in the tank. This method comprises a step of using the ultrasound sensor for emitting sound waves at a frequency and an intensity adapted to decontaminate the tank.

In the method according to the invention, the ultrasound sensor contains at least an ultrasound emitter.

The method is operated while the aqueous solution is not frozen.

By "decontaminating", it is meant that the development of microbial species such as bacteria, algae and/or fungi is prevented. The antimicrobial effect of the method is measured according to the norm ISO22196:2011 or to the norm ISO 16869:2008 depending on the nature of the microbial species.

Targeted microbial species are more precisely, but not only, bacteria, specially gram negative bacteria, and fungi.

The method according to the invention does not require additional mounting and processing operations of components of the system, nor the use of additional components. The method operates a component that is already present in the tank and performs a primary function for fluid processing and storage, i.e. quality or level measurement. The use of a sensor as a decontaminating device increases the overall system resistance to microorganisms such as bacteria, algae, and fungi at a limited cost and with no additional architecture or structural changes. Moreover, the total power consumption of the sensor can be managed dedicating power to decontamination modes when quality measures are not mandatory. The probing time frames of the sensor can be adapted to suit the versatility of the component, in order to regulate and distribute the power available to both its functions efficiently. The main advantages are therefore increased integration of the system, better power consumption management, potential weight gain and fewer assembly operations. In another embodiment, the method can be operated with a sensor that is specifically dedicated to decontaminating the fluid contained in the tank.

As a consequence, this method is less complex and expensive.

Therefore, the invention solves the problem of providing a method for decontaminating that is less complex and expensive to operate, and prevents additional maintenance operations of additional components.

The aqueous solution might be urea or water for example. It might be a colloidal solution.

According to a first embodiment of the invention, the step of using the ultrasound sensor for emitting sound waves at a frequency and an intensity adapted to decontaminate is performed at an intensity above 5 W/cm².

This intensity is high enough to cause permanent damage to the microorganism. At lower intensity, it is believed that ultrasound can have the opposite effect and promote cell growth.

In a first variant of this embodiment, the step of using the ultrasound sensor to decontaminate is performed at a frequency below 100 kHz, advantageously between 20 and 50 kHz.

In a second variant of this embodiment, the step of using the ultrasound sensor to decontaminate is performed at a frequency of 1 MHz.

Preferably, the step of using the ultrasound sensor to decontaminate is performed during a time of at least 15 seconds.

The time necessary for reducing the growth of or killing microorganisms depends on the type of microorganism. In general, at least 15 min exposure time is necessary for fungi. For bacteria, depending on the specie, 15 seconds exposure might be sufficient.

The method for decontaminating is preferably operated at a temperature in the range of 0 to 100°C, and preferably between 3 and 80°C, and even more preferably between 15 and 45°C.

The emitted ultrasound waves must have a frequency and an intensity adapted to kill or at least to mitigate or stymie the growth of microorganisms such as bacteria, algae or fungi.

Optionally, the method further comprises:
- using a tank with an antimicrobial agent embedded in the tank material or coated on its internal surface, or
- a step of treating the aqueous solution with an antimicrobial agent.
It has been noted that ultrasounds temporarily increase the outer membrane permeability of bacteria to antimicrobial agents resulting thereby in a synergistic effect.

Alternatively, the method for decontaminating according to the invention is operated in combination with the use of UV radiations.

Preferably, the ultrasound sensor is a level sensor. In general, the ultrasound sensor is placed in the tank below the solution level and directs sound waves towards the air-liquid interface. Therefore the ultrasound waves cross a significant volume of fluid between the sensor and the air-liquid interface.

Alternatively, the ultrasound sensor is a quality sensor. In another embodiment both a quality sensor and a level sensor are used in combination to decontaminate the tank.

It is also an object of the invention to provide a method for operating an automotive tank for an aqueous solution comprising an ultrasound sensor. The method comprises a step of decontaminating the tank using the ultrasound sensor according to the above described method for decontaminating, and a step of measuring a parameter of the solution using the same ultrasound sensor as that used during the step of decontaminating. The sensor has two functions and alternates between two different modes, probing (sensing mode, level or quality) and decontaminating (decontamination mode), depending on the need. The sensing mode needs high ultrasound frequencies (1 MHz) and low energy (about 3 W/cm²). In addition, the sensing mode is generally operated repeatedly during extremely short period of time. The decontamination mode needs, in a first embodiment, low ultrasound frequencies (in general below 100 kHz) and higher energy (above 5 W/cm²). In a second embodiment, energy is high as well, but frequency equals 1 MHz. The two different modes, sensing and decontamination, can be achieved modifying instantaneously the frequency and amplitude of the waves emitted by the sensor to either decontaminate or mitigate or even stymie the growth of microorganisms within the fluid. During the decontamination mode, the sensing is not possible, but as the level and quality variations in the system are slow, it is acceptable to stop the sensing during the decontamination phases.

Optionally, measuring is performed at the same time as decontaminating.

Alternatively, decontaminating and measuring steps are performed non-simultaneously.

In a particular embodiment, the parameter is the volume of the aqueous solution in the tank, wherein the volume of the aqueous solution pumped out of the tank is stored in a memory, and wherein, during the decontaminating step, the volume of the solution remaining in the tank is calculated from the last measured value of the volume minus the removed volume. In this embodiment, it is possible to estimate the level, even during the decontamination phase.

A further aspect of the invention is the use of an ultrasound sensor for decontaminating an automotive tank.

It is also an object of the invention to provide an automotive fluid tank for an aqueous solution comprising an ultrasound sensor and a controller configured for emitting sound waves at frequencies and intensities adapted to decontaminate the tank and to measure a parameter of the solution.

The invention will be better understood on reading the following examples, including a figure.

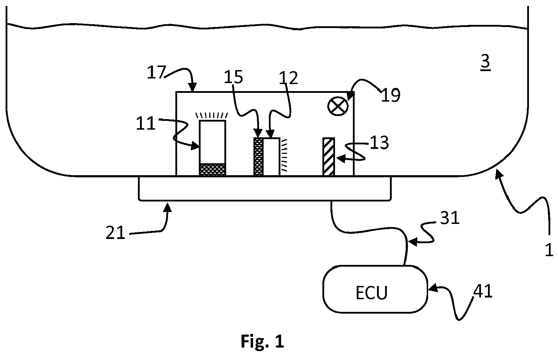

Figure 1 illustrates a schematic view of a tank comprising ultrasound sensors for measuring parameters of a solution stored in the tank, in which the ultrasound sensors can be used for decontaminating the tank according to the method of the invention.

More precisely, figure 1 discloses an automotive tank 1 for an aqueous solution 3. The tank 1 comprises two ultrasound sensors 11, 12/13/15, arranged for measuring a parameter of the solution 3. In particular, the ultrasound sensor 11 contains an ultrasound source, or ultrasound emitter, and is a level sensor. Sensor 12/13/15 comprises a second ultrasonic source 12 and two reflectors 13 and 15. Sensor 12/13/15 is a fluid quality sensor. Sensors 11 and 12/13/15 are assembled in a quality level sensor 17. The quality level sensor 17 may contain other accessories 19 that are passive or active components, to achieve other functions or to complete quality sensing. For instance, the accessory 19 can be a temperature sensor integrated to the sensor 17, to obtain a quality level temperature sensor 17. Another accessory 19 could be a sensor for the hardness of the aqueous solution 3. The tank 1 is provided with an electrical cover 21 that integrates a wire harness 31 that transmits electricity to the components of the quality level sensor 17. It transmits also signals to and from the components of the quality level sensor 17. These signals are directed to or come from a controller 41, also called electronic control unit or ECU.

The tank 1 can be used according to the state of the art as follows:
The level sensor 11 is used to emit ultrasound waves towards the surface of the solution 3 in the tank and to receive the same waves coming from the surface of the solution 3 back to the sensor 11. The propagation time measurement performed in this way can be used to determine the level of the solution 3. The controller 41 measures the speed of sound between emitter 11 and the surface of water 3. The controller 41 applies the measured speed of sound value to a look-up table for determining the distance between sensor 11 and the surface of water 3, determining thus the level of water 3 in the tank 1. During this sensing mode, emitted ultrasounds have an intensity in the range of 0.1 to 2 W/cm², preferably in the range of 0.2 to 0.8 W/cm², and a frequency in the range of 0.5 to 2 MHz.
The reflector 13 of the quality sensor 12/13/15 is located at a known distance from the emitter 12. Ultrasound waves generated by the emitter 12 propagate through water 3 and are reflected off the reflector 13 back towards the emitter 12 and the reflector 15. The reflected ultrasonic sound wave is detected by the emitter 12 and reflects off the reflector 15 back towards the reflector 13. The quality is estimated from a computation based on the speed of sound in water 3. The controller 41 calculates the speed of sound using the known distance value between emitter 12 and reflector 13 and the measured duration of ultrasonic reflections. The controller 41 applies the calculated speed of sound value to a look-up table for determining an estimated quality value. During this sensing mode, emitted ultrasounds have an intensity in the range of 0.1 to 2 W/cm², preferably in the range of 0.2 to 0.8 W/cm², and a frequency in the range of 0.5 to 2 MHz.

The method for decontaminating according to the invention is operated in this embodiment as follows:
During the decontamination mode, both sensors 11, 12/13/15 or only one of the sensors can be used.
Each sensor 11, 12/13/15 can be used to emit ultrasound waves in the same direction of propagation as during the sensing mode. However, the intensity and frequency are different. Ultrasound waves are emitted at an intensity above 5 W/cm² and at a frequency below 100 kHz or equal to 1 MHz, during a time of at least 15 seconds. These frequencies and intensities are adapted to decontaminate the tank 1, and in particular to kill microorganisms such as bacteria, algae or fungi.

The method for decontaminating can be part of a method for operating the automotive tank 1, that comprises as well a step of measuring a parameter of the aqueous solution using the same ultrasound sensors 11, 12/13/15 as those used during the step of decontaminating. In this method, the sensor alternates between a sensing mode, with an intensity in the range of 0.1 to 2 W/cm², preferably in the range of 0.2 to 0.8 W/cm², and a frequency in the range of 0.5 to 2 MHz, and a decontaminating mode, with an intensity above 5 W/cm² and a frequency below 100 kHz or equal to 1 MHz. If the measured parameter is the volume (or level) of water 3, it is advantageous that the volume of water pumped out of the tank 1 is stored in a memory of the controller 41. Thus, during the decontaminating step, the volume of water 3 remaining in the tank 1 can be calculated from the last measured value of the volume minus the removed volume.

In this example where two distinct sensors 11, 12/13/15 are provided in the tank 1, it is possible to continue decontaminating with one ultrasound sensor, preferably the level sensor 11, while using the other ultrasound sensor, preferably the quality sensor 12/13/15, for measurement.

Although the invention has been described hereinabove by reference to specific embodiments, this is done for illustrative and not for limiting purposes.

## Claims

1. Method for decontaminating an automotive tank (1) for an aqueous solution (3) comprising an ultrasound sensor (11, 12/13/15) arranged for measuring a parameter of the solution (3) stored in the tank (1), **characterized in that** the method comprises a step of using the ultrasound sensor (11, 12/13/15) for emitting sound waves at a frequency and an intensity adapted to decontaminate the tank (1).

2. Method according to the preceding claim, in which the step of using the ultrasound sensor (11, 12/13/15) for emitting sound waves at a frequency and an intensity adapted to decontaminate is performed at an intensity above 5 W/cm².

3. Method according to the preceding claim, in which the step of using the ultrasound sensor (11, 12/13/15) for emitting sound waves at a frequency and an intensity adapted to decontaminate is performed at a frequency below 100 kHz, advantageously between 20 and 50 kHz.

4. Method according to claim 2, in which the step of using the ultrasound sensor (11, 12/13/15) for emitting sound waves at a frequency and an intensity adapted to decontaminate is performed at a frequency of 1 MHz.

5. Method according to any one of the preceding claims, in which the step of using the ultrasound sensor (11, 12/13/15) for emitting sound waves at a frequency and an intensity adapted to decontaminate is performed during a time of at least 15 seconds.

6. Method according to any one of the preceding claims, in which emitted sound waves have a frequency and an intensity adapted to kill microorganisms such as bacteria, algae, fungi, or to mitigate or stymie their growth.

7. Method according to any one of the preceding claims, further comprising:
- using a tank (1) with an antimicrobial agent embedded in the tank material or coated on the internal surface of said tank (1), or
- a step of treating the aqueous solution (3) with an antimicrobial agent.

8. Method according to any one of the preceding claims, in which the ultrasound sensor is a level sensor (11).

9. Method for operating an automotive tank (1) for an aqueous solution (3) comprising an ultrasound sensor (11, 12/13/15), comprising a step of decontaminating the tank (1) using the ultrasound sensor (11, 12/13/15) according to any one of the previous claims, and a step of measuring a parameter of the solution (3) using the same ultrasound sensor (11, 12/13/15) as that used during the step of decontaminating.

10. Method for operating an automotive tank (1) according to claim 9, wherein the parameter is the volume of the aqueous solution (3) in the tank (1), wherein the volume of the aqueous solution (3) pumped out of the tank (1) is stored in a memory (41), and wherein during the decontaminating step, the volume of the solution (3) remaining in the tank (1) is calculated from the last measured value of the volume minus the removed volume.

11. Use of an ultrasound sensor (11, 12/13/15) arranged for measuring a parameter of an aqueous solution (3) stored in an automotive tank (1), for decontaminating the tank (1).

12. Automotive fluid tank (1) for an aqueous solution (3) comprising an ultrasound sensor (11, 12/13/15) and a controller (41) configured for emitting sound waves at frequencies and intensities adapted to decontaminate the tank (1) and to measure a parameter of the solution (3).
